# EUROPEAN PATENT SPECIFICATION

(11) **EP 0 870 773 B1**
(45) Date of publication and mention of the grant of the patent: **08.01.2003**
(21) Application number: 98302626.1
(22) Date of filing: 03.04.1998
(51) Int. Cl.: C08F 4/24, C08F 10/00, C08F 2/34

(54) **Ethylene polymerization process in the presence of a chromium oxide catalyst**
Ethylenpolymerisationsverfahren in Gegenwart eines Chromoxydkatalysators
Procédé de polymérisation d'éthylène en présence d'ecatalyseur à base d'oxyde de chrome

(30) Priority: 10.04.1997 FR 9704640
(43) Date of publication of application: 14.10.1998
(73) Proprietor: BP Chemicals Limited, Sunbury-on-Thames, Middlesex TW16 7LN (GB); BP Chemicals S.N.C., Cergy St. Christophe, 95866 Cergy Pontoise Cedex (FR)
(72) Inventor: Maxant, Daniel, BP Chemicals S.N.C., BP No. 6, 13117 Lavera (FR); Philippart, Christian, BP Chemicals S.N.C., BP No. 6, 13117 Lavera (FR)
(74) Representative: Preece, Michael

(56) References cited:
- EP-A- 0 186 174
- US-A- 4 194 073

## Description

The present invention relates to a process for the (co)polymerization of ethylene, optionally with one or more alpha-olefins, using a catalyst based on chromium oxide.

It is already known to polymerize ethylene, alone or as a mixture with at least one alpha-olefin, in the presence of a catalyst comprising a chromium oxide, which is combined with a granular support based in particular on a refractory oxide and is activated by a heat treatment at a relatively high temperature prior to the use of the catalyst in polymerization.

It is generally desired to manufacture a (co)polymer of ethylene directly with a content of catalytic residues which is as low as possible, so as to be able to achieve extremely high quality levels. This is equivalent to attempting to use a catalyst which has the best possible polymerization performance, that is to say to increase its catalytic activity. Many methods exist which make it possible to achieve this aim, but they generally have a very profound effect on the physical properties of the (co)polymer, such as the relative density, the weight-average molar mass or the distribution of the molecular masses. Thus, it is known that it is possible to vary the heat treatment conditions which make it possible to activate the catalyst before the polymerization. It is also known to carry out the polymerization at a high temperature and/or under extremely high purity conditions, for example by using a polymerization mixture and reactants which are particularly free from impurities or in the presence of products which are capable of destroying these impurities, such as organometallic compounds.

It is also known that halogenated compounds are virulent poisons of catalysts based on chromium oxide in the polymerization of ethylene. Moreover, it is known that it is not possible to transpose what is known of other catalytic systems, such as Ziegler-type catalysts, to catalysts based on chromium oxide in the polymerization of ethylene. This is because the polymerization mechanisms are completely different between these two catalytic systems and involve in particular activation or in contrast deactivation processes which are not transposable from one catalytic system to the other.

European Patent Application n° 0 186 174 discloses a process for (co-) polymerizing ethylene in the presence of a chromium oxide catalyst which is treated prior to or during the polymerization reaction by a modifying agent selected from carbon monoxides, carbonyl sulfide, hydrogen sulfide, oxygen, water, alcohols, aldehydes, ketones, mercaptans, amines and mixtures of any two or more thereof, under conditions so that to increase the environmental stress cracking resistance of the polymer produced. Comparative run n° 28 discloses an ethylene/hexene-1 copolymerisation in suspension in liquid isobutane in the presence of a chromium oxide catalyst and carbon tetrachloride. The catalyst activity is reduced of about 10% in comparison to run 29 under identical conditions except for the presence of carbon tetrachloride.

United States Patent n°4, 194, 073 discloses an olefin polymerization process in the presence of a chromium oxide catalyst in a liquid hydrocarbon diluent, the catalyst being treated prior to or during the polymerization by an aromatic compound such as benzene, o-xylene, a monohalogenated derivative of benzene or o-xylene or mixtures thereof. The presence of benzene tends to depress the catalyst activity during polymerization.

It has been found, surprisingly, that when a halogenated alkane or cycloalkane is used in a (co)polymerization of ethylene in the presence of a catalyst based on chromium oxide, it no longer acts as a poison but, in contrast, as an activator of the (co)polymerization.

The present invention consequently relates to a process for a (co)polymerization of ethylene carried out in a gas phase polymerization medium in the presence of a catalyst based on chromium oxide, characterized in that the process comprises introducing into the said medium a halogenated alkane or cycloalkane in an amount such that the molar ratio of the halogenated alkane or cycloalkane to the chromium of the catalyst which are introduced into the gas phase polymerization medium is in a range from 0.001 to 1, preferably from 0.005 to 0.5, more particularly from 0.01 to 0.3.

The activity of the catalyst can be assessed and measured by the amount of (co)polymer manufactured per millimole of chromium per hour of reaction and per MPa of ethylene pressure and optionally of alpha-olefin pressure. The activating effect of the halogenated alkane or cycloalkane is assessed, for its part, by comparing the activity of the catalyst in the presence and in the absence of the halogenated alkane or cycloalkane under (co)polymerization conditions which are moreover identical.

When a halogenated alkane or cycloalkane is used according to the present invention, it is surprisingly found a relatively large increase in the activity of the catalyst which is in general at least 10%. In most cases it may be greater than 15% and can reach e.g. 75%.

According to the invention, it is possible to use a monohalogenated or, preferably, polyhalogenated alkane or cycloalkane. It is preferable to use a monochlorinated or, preferably, polychlorinated alkane or cycloalkane.

The halogenated alkane can correspond to the general formula

CₙHₐX_{b}

in which X represents a halogen atom, for example bromine or, preferably, chlorine, a and b are identical or different integers, a ranging from 0 to 2n + 1, preferably from 0 to 2n, b ranging from 1 to 2n + 2, preferably from 2 to 2n + 2, and the sum (a + b) being equal to 2n + 2. In this general formula, n can range from 1 to 12 and b from 1 to 12, n can preferably range from 1 to 4 and b from 2 to 6, and more particularly n can be 1 or 2 and b range from 2 to 4.

The halogenated cycloalkane can correspond to the general formula

CₘH_{c}X_{d}

in which X represents a halogen atom, for example bromine or, preferably, chlorine, c and d are identical or different integers, c ranging from 0 to 2m - 1, preferably from 0 to 2m - 2, d ranging from 1 to 2m, preferably from 2 to 2m, and the sum (c + d) being equal to 2m. In this general formula, m can range from 5 to 12 and d from 1 to 12 and, preferably, m can range from 6 to 8 and d from 1 to 8.

It is possible in particular to choose dichloromethane, chloroform, carbon tetrachloride, 1,1,1-trichloroethane or 1,2-dichloroethane. Chloroform is preferred.

The present invention consequently also relates to a process for a (co)polymerization of ethylene carried out in a gas phase polymerization medium in the presence of a catalyst based on chromium oxide, characterized in that the process comprises introducing into the said medium a halogenated alkane or cycloalkane in an amount such that the molar ratio of the halogenated alkane or cycloalkane to the chromium of the catalyst which are introduced into the polymerization medium is in a range from 0.001 to 1, preferably from 0.005 to 0.5, more particularly from 0.01 to 0.3.

The (co)polymerization is carried out in a polymerization medium composed essentially of a gas phase, in particular in a fluidized-bed and/or mechanically stirred reactor.

The (co)polymerization can be carried out non-continuously or, preferably, continuously. In a continuous (co)polymerization process, the ethylene and optionally the comonomer are introduced continuously into the gas phase polymerization medium, while the catalyst is introduced continuously or semi-continuously or intermittently into the gas phase polymerization medium and while the (co)polymer manufactured is withdrawn continuously or, preferably, semi-continuously or intermittently from the gas phase polymerization medium.

Advantageously, in a continuous process for the (co)polymerization of ethylene, the halogenated alkane or cycloalkane is introduced continuously into the gas phase polymerization medium.

It can also be advantageous to introduce the halogenated alkane or cycloalkane in the form of a solution or of a mixture in one or more liquid hydrocarbons, in particular C₄ to C₁₀ hydrocarbons, for example one or more C₄ to C₁₀ alkanes or cycloalkanes, such as n-pentane, isopentane, n-hexane or n-heptane.

The (co)polymerization can be carried out by introduction into the gas phase polymerization medium of specific additives, such as agents for modifying the (co)polymers of ethylene or for purifying the polymerization mixture, for example hydrogen, oxygen or organometallic compounds, such as organoaluminium compounds or organomagnesium compounds.

The process of the present invention makes it possible to polymerize ethylene alone or to copolymerize ethylene with at least one alpha-olefin, in particular a C₃ to C₈ alpha-olefin, such as propylene, 1-butene, 1-pentene, 1-hexene or 4-methyl- 1-pentene.

The (co)polymerization can be carried out at a temperature of less than the melting point of the (co)polymer manufactured, generally at a temperature ranging from 30 to 120°C, preferably from 60 to 110°C, and under a total absolute pressure ranging from 0.1 to 5 MPa, preferably from 0.5 to 3 MPa.

The present invention advantageously relates to a continuous process for a gas phase (co)polymerization of ethylene with optionally at least one alpha-olefin, carried out in a fluidized-bed and/or mechanically stirred reactor, comprising the continuous introduction of ethylene and optionally of the alpha-olefin, the continuous or semi-continuous introduction of a catalyst based on chromium oxide and the continuous or semi-continuous withdrawal of the (co)polymer from the reactor, which process is characterized in that a halogenated alkane or cycloalkane is continuously introduced into the reactor in an amount such that the molar ratio of the halogenated alkane or cycloalkane to the chromium of the catalyst which are introduced into the reactor is in a range from 0.001 to 1, preferably from 0.005 to 0.5, more particularly from 0.01 to 0.3.

A gaseous polymerization medium which advantageously contains ethylene and optionally at least one alpha-olefin, hydrogen and an inert gas, such as nitrogen or a C₁ to C₈ alkane, preferably a C₄ to C₆ alkane, in particular isopentane and/or n-pentane, can circulate through the reactor.

It can also be advantageous to introduce, preferably continuously, an organometallic compound, in particular an organoaluminium compound, such as triethylaluminium, into the reactor.

The (co)polymerization can also be carried out according to the process described in Patent Application PCT No. WO 94/28032.

The catalyst can also be used in the form of an ethylene prepolymer prepared outside the reactor prior to the (co)polymerization.

In a continuous and gas-phase process for the (co)polymerization of ethylene with optionally at least one alpha-olefin, it may be found to be particularly advantageous to feed the polymerization reactor with ethylene, optionally with alpha-olefin, with catalyst and with halogenated alkane or cycloalkane at constant flow rates. It is generally accepted that a flow rate is constant if it does not vary by more than 5%, preferably by not more than 2%, and that a ratio of one quantity to another is constant if it does not vary by more than 10%, preferably by not more than 5%. As a result of these operating conditions, the ethylene, and optionally alpha-olefin, partial pressures and the total pressure of the gaseous polymerization medium can vary continually with time. It is found that it is thus possible to continuously manufacture a (co)polymer of ethylene which is constant and high in quality, that is to say with a greatly reduced residual catalyst content.

The catalysts based on chromium oxide are obtained by a large number of known processes, in particular by those according to which, in a first stage, a chromium compound, such as a chromium oxide generally of formula CrO₃, or a chromium compound which can be converted by calcination into chromium oxide, such as, for example, a chromium nitrate or sulphate, an ammonium chromate, a chromium carbonate, acetate or acetylacetonate or a tert-butyl chromate, is combined with a granular support based on a refractory oxide, such as, for example, silica, alumina, zirconium oxide, thorium oxide, titanium oxide or mixtures or coprecipitates of two or more of these oxides. In a second stage, the chromium compound thus combined with the granular support is subjected to a so-called activation operation by heat treatment at a temperature of at least 250°C and of at most the temperature at which the granular support begins to sinter; the temperature of the heat treatment is generally between 250 and 1200°C and preferably between 350 and 1000°C. This heat treatment is carried out under a non-reducing atmosphere, preferably under an oxidizing atmosphere, generally composed of a gas mixture comprising oxygen, such as, for example, air. The duration of the heat treatment can be between 5 minutes and 24 hours, preferably between 30 minutes and 15 hours, so that, at the end of this treatment, the chromium compound is found to be at least partially in the hexavalent state. The content by weight of chromium in the catalyst thus obtained is generally between 0.05 and 30% and preferably between 0.1 and 3%.

The granular supports based on a refractory oxide used in the preparation of the catalysts based on chromium oxide are generally provided in the form of solid particles which have a mean diameter by mass of between 20 and 300 µm. These granular supports can be obtained by various known processes, in particular by precipitation of silicon compounds, such as silica, from an alkali metal silicate solution or alternatively by coprecipitation of a gel or of a hydrogel of a refractory oxide from solutions comprising at least two compounds chosen from silicon, titanium, zirconium, thorium or aluminium compounds. Such processes are described in particular in United States Patents No. 4,053,436 and No. 4,101,722.

Another method for the preparation of the catalysts based on chromium oxide can consist, first of all, in preparing a silica and titanium oxide support by calcination of a titanium compound, such as titanium tetraisopropoxide, deposited on silica, at a temperature of between 500 and 900°C under a dry air atmosphere, in then impregnating the said support with a chromium compound, such as tert-butyl chromate, and in subjecting the product obtained to the so-called activation operation by heat treatment. Such a method is described, for example, in United States Patent No. 3,879,362.

It is also possible to use a catalyst obtained, in a first stage, by coprecipitation of a gel or of a hydrogel, such as that mentioned above, in the presence of a chromium compound, so that a cogel is formed comprising, on the one hand, at least one refractory oxide, such as silica or alumina, and, on the other hand, a chromium compound. In a second stage, this cogel is dried and then subjected to the so-called activation operation by heat treatment.

Another technique for the preparation of the catalysts based on chromium oxide can consist in carrying out the so-called activation operation in the presence of certain titanium compounds, such as titanium tetraisopropoxide, according to a method described, for example, in French Patent No. 2,134,743.

Another method for the preparation of the catalysts based on chromium oxide can consist in carrying out the so-called activation operation in the presence of fluorine compounds chosen from ammonium hexafluorotitanate, tetrafluoroborate and hexafluoro-silicate and optionally in the presence of a titanium compound chosen from titanium alkoxides, this method advantageously making it possible to increase the activity of these catalysts or to modify the properties of the polyethylenes produced. For example, United States Patent No. 3,130,188 describes a supported catalyst based on chromium oxide, this catalyst being obtained in particular by the so-called activation operation in the presence of a fluorine compound, such as an ammonium fluorosilicate. Another method, described in British Patent No. 1,391,771, consists in carrying out the so-called activation operation for the supported catalyst based on chromium oxide in the presence, on the one hand, of a titanium compound, such as a titanium alkoxide, for example titanium tetraisopropoxide, and, on the other hand, of a fluorine compound, such as ammonium hexafluorotitanate, tetrafluoroborate or hexafluorosilicate. The fluorine content in these catalysts is preferably between 0.05 and 8% by weight.

According to another embodiment, it is possible to modify the catalysts by bringing them into contact with organometallic compounds, such as an alteryl-aluminium alkoxide, according to a method described, for example, in French Patent No. 2,269,537.

It is preferable to use a catalyst based on chromium oxide modified with titanium and/or aluminium and/or fluorine. Thus, the catalyst can contain from 0.05 to 30%, preferably from 0.1 to 3%, by weight of chromium and, moreover, from 0.1 to 20%, preferably from 1 to 10%, by weight of titanium and/or from 0.1 to 10%, preferably from 0.5 to 5%, by weight of aluminium and/or from 0.05 to 8%, preferably from 0.1 to 5%, by weight of fluorine.

One of the advantages of the process according to the present invention is to increase the activity of the catalyst in polymerization, that is to say to produce a larger amount of (co)polymer for the same amount of catalyst used, without substantially modifying the physical properties of the (co)polymer, such as the density or the distribution of the molecular masses. It is observed that the use of halogenated alkane or cycloalkane according to the present invention can increase the melt flow index of the (co)polymer as measured under the standard ASTM-D-1238 (condition F, P or E), that is to say decrease the weight-average molecular mass of the (co)polymer, which is often regarded as an advantage.

The following non-limiting examples illustrate the present invention.

### Example 1

A catalyst based on chromium oxide supported on silica and modified with titanium was prepared in the following way. A catalyst based on chromium (1% by weight of chromium) supported on silica, sold under the trade name "EP 30X" ® by Joseph Crossfield and Sons (Warrington GB), was introduced under a nitrogen atmosphere into a fluidized-bed activator. The activator was then heated to 150°C under nitrogen and was maintained at this temperature for 1.5 hours. A mixture of titanium tetraisopropoxide and of titanium tetrabutoxide (in a molar ratio 80:20 respectively) was then introduced therein and the temperature was increased to 300°C. At this point, the nitrogen was replaced with dry air and the temperature was raised to 550°C and then maintained at this level for 6 hours. The activator was cooled to room temperature (to 20°C) and the catalyst was then stored under nitrogen. It contained 4.7% by weight of titanium and 1% by weight of chromium.

200 g of a predried polyethylene powder were introduced, as powder charge, into a gas-phase polymerization reactor with a capacity of 2.6 litres equipped with a mechanical stirrer. The mechanical stirrer was brought to 350 revolutions/minute and the temperature was set at 100°C. The gaseous polymerization medium contained ethylene and hydrogen in the following proportions:
ethylene partial pressure = 1.2 MPa
hydrogen partial pressure = 0.3 MPa
An amount of the catalyst prepared above corresponding to 0.038 millimole of chromium and chloroform in an amount such that the molar ratio of the chloroform to the chromium of the catalyst was equal to 0.04 were introduced into the reactor. Finally, triethylaluminium (TEA) was introduced into the reactor in an amount such that the molar ratio of the TEA to the chromium of the catalyst was equal to 5.

It was observed that the activity of the catalyst gradually increased with time and that, when 400 g of polyethylene were produced, the instantaneous activity of the catalyst at this point was equal to 16,900 grams of polyethylene per millimole of chromium per hour and per MPa of ethylene (g.mMCr⁻¹.h⁻¹.MPa⁻¹).

### Example 2 (comparative)

The polymerization was carried out exactly as in Example 1, except for the fact that no chloroform was introduced.

It was observed that the instantaneous activity of the catalyst at the point where 400 g of polyethylene were produced was equal to 14,700 g.mMCr⁻¹.h⁻¹.MPa⁻¹. The activity of the catalyst in Example 1 was thus 15% higher than that observed in Example 2 (comparative).

### Example 3

The polymerization was carried out exactly as in Example 1, except for the fact that the chloroform was used in amounts such that the molar ratio of the chloroform to the chromium of the catalyst was successively 0.17, 0.20, 0.23 and 0.26. It was observed that the instantaneous activity of the catalyst for 400 g of polyethylene produced was respectively equal to 17,200, 19,200, 14,750 and 13,300 g.mMCr⁻¹.h⁻¹.MPa⁻¹.

### Example 4

The polymerization was carried out exactly as in Example 1, except for the fact that no TEA was introduced and that the amount of chloroform was such that the molar ratio of the chloroform to the chromium of the catalyst was 0.20. It was observed that the instantaneous activity of the catalyst for 400 g of polyethylene produced was equal to 7700 g.mMCr⁻¹.h⁻¹.MPa⁻¹.

### Example 5 (comparative)

The polymerization was carried out exactly as in Example 4, except for the fact that no chloroform was used. It was observed that the instantaneous activity of the catalyst for 400 g of polyethylene produced was equal to 4400 g.mMCr⁻¹.h⁻¹.MPa⁻¹. The catalyst activity in Example 4 was 75% higher than that observed in Example 5 (comparative).

### Example 6

A catalyst based on chromium oxide modified with aluminium, containing 1% by weight of chromium and 2% by weight of aluminium, sold by PQ Corporation under the trade name "PQC 24 340" ®, was introduced under a nitrogen atmosphere into a fluidized bed activator which was then heated to 300°C under nitrogen and maintained at this temperature for 5 hours. At this point, the nitrogen was replaced with dry air and the temperature was raised to 650°C and then maintained at this level for 5 hours. The activator was cooled to room temperature (to 20°C) and the catalyst was then stored under nitrogen.

The polymerizations were carried out exactly as in Example 1, except for the fact that the catalyst used was the above-mentioned catalyst, and that the chloroform was used in amounts such that the molar ratio of the chloroform to the chromium of the catalyst was successively 0.04, 0.17, 0.20 and 0.23. It was observed that the instantaneous activity of the catalyst for 400 g of polyethylene produced was respectively equal to 17,960, 19,510, 18,980 and 15,110 g.mM Cr⁻¹.h⁻¹.MPa⁻¹.

### Example 7 (comparative)

The polymerization was carried out exactly as in Example 6, except for the fact that no chloroform was used.

It was observed that the instantaneous activity of the catalyst for 400g of polyethylene produced was equal to 13,160g.mMCr^{-1.}h^{-1.} MPa⁻¹.

## Claims

1. Process for a (co)polymerization of ethylene in the presence of a catalyst based on chromium oxide, **characterized in that** the process is carried out in a gas phase polymerization medium and comprises introducing into thesaid medium a halogenated alkane or cycloalkane in an amount such that the molar ratio of the halogenated alkane or cycloalkane to the chromium of the catalyst which are introduced into the gas phase polymerization medium is from 0.001 to 1.

2. Process according to Claim 1, **characterized in that** the halogenated alkane corresponds to the general formula
CₙHₐX_{b}
in which X represents a halogen atom, a and b are identical or different integers, a ranging from 0 to 2n + 1, b ranging from 1 to 2n + 2 and the sum (a + b) being equal to 2n + 2, and **in that** the halogenated cycloalkane corresponds to the general formula
CₘH_{c}X_{d}
in which X represents a halogen atom, c and d are identical or different integers, c ranging from 0 to 2m - 1, d ranging from 1 to 2m and the sum (c + d) being equal to 2m.

3. Process according to any one of Claims 1 to 2, **characterized in that** the halogenated alkane or cycloalkane is chosen from dichloromethane, chloroform, carbon tetrachloride, 1,1,1-trichloroethane of 1,2-dichloroethane.

4. Process according to any one of Claims 1 to 3, **characterized in that** it is carried out in a fluidized bed and/or stirred bed reactor.

5. Process according to any one of Claims 1 to 4, **characterized in that** the (co)polymerization process is carried out continuously and that the halogenated alkane or cycloalkane is introduced continuously into the gas phase polymerization medium.

6. Process according to any one of Claims 1 to 5, **characterized in that** the halogenated alkane or cycloalkane is introduced in the form of a solution or of a mixture in one or more liquid hydrocarbons.

7. Continuous process for a gas phase (co)polymerization of ethylene with optionally at least one alpha-olefin, carried out in a fluidized-bed and/or mechanically stirred reactor, comprising the continuous introduction of the ethylene and optionally of the alpha-olefin, the continuous or semi-continuous introduction of a catalyst based on chromium oxide and the continuous or semi-continuous withdrawal of the (co)polymer from the reactor, which process is **characterized in that** a halogenated alkane or cycloalkane is continuously introduced into the reactor in an amount such that the molar ratio of the halogenated alkane or cycloalkane to the chromium of the catalyst which are introduced into the reactor is from 0.001 to 1.

8. Process according to any one of Claims 1 to 7, **characterized in that** the catalyst based on chromium oxide is modified with titanium and/or aluminium and/or fluorine.

9. Use of a halogenated alkane or cycloalkane as an agent for increasing the catalyst activity of a chromium oxide catalyst in a gas phase (co)polymerisation of ethylene.

## Patentansprüche

1. Verfahren zur (Co)Polymerisation von Ethylen in Gegenwart eines auf Chromoxid basierenden Katalysators, **dadurch gekennzeichnet, dass** das Verfahren in einem Gasphasen-Polymerisationsmedium durchgeführt wird und die Einbringung eines halogenierten Alkans oder Cycloalkans in das besagte Medium in einer solchen Menge umfasst, dass das Molverhältnis des halogenierten Alkans oder Cycloalkans zum Chrom des Katalysators, welche in das Gasphasen-Polymerisationsmedium eingebracht werden, im Bereich von 0,001 bis 1 liegt.

2. Verfahren gemäß Anspruch 1, **dadurch gekennzeichnet, dass** das halogenierte Alkan der allgemeinen Formel
CₙHₐX_{b}
entspricht, wobei X für ein Halogenatom steht und a und b gleiche oder unterschiedliche ganze Zahlen sind, wobei a im Bereich von 0 bis 2n + 1 liegt, b im Bereich von 1 bis 2n + 2 liegt und die Summe (a + b) gleich 2n + 2 ist, und dass das halogenierte Cycloalkan der allgemeinen Formel
CₘH_{c}X_{d}
entspricht, wobei X für ein Halogenatom steht und c und d gleiche oder unterschiedliche ganze Zahlen sind, wobei c im Bereich von 0 bis 2m - 1 liegt, d im Bereich von 1 bis 2m liegt und die Summe (c + d) gleich 2m ist.

3. Verfahren gemäß irgendeinem der Ansprüche 1 bis 2, **dadurch gekennzeichnet, dass** das halogenierte Alkan oder Cycloalkan aus Dichlormethan, Chloroform, Tetrachlorkohlenstoff, 1,1,1-Trichlorethan oder 1,2-Dichlorethan ausgewählt wird.

4. Verfahren gemäß irgendeinem der Ansprüche 1 bis 3, **dadurch gekennzeichnet, dass** es in einer Wirbelschicht und/oder einem Reaktor mit gerührtem Bett durchgeführt wird.

5. Verfahren gemäß irgendeinem der Ansprüche 1 bis 4, **dadurch gekennzeichnet, dass** das (Co)Polymerisationsverfahren kontinuierlich durchgeführt wird und dass das halogenierte Alkan oder Cycloalkan kontinuierlich in das Gasphasen-Polymerisationsmedium eingebracht wird.

6. Verfahren gemäß irgendeinem der Ansprüche 1 bis 5, **dadurch gekennzeichnet, dass** das halogenierte Alkan oder Cycloalkan in Form einer Lösung oder eines Gemisches in einem oder mehreren flüssigen Kohlenwasserstoffen eingebracht wird.

7. Kontinuierliches Verfahren zur Gasphasen-(Co)Polymerisation von Ethylen, gegebenenfalls zusammen mit mindestens einem Alpha-Olefin, welches in einer Wirbelschicht und/oder einem mechanisch gerührten Reaktor durchgeführt wird, welches die kontinuierliche Einbringung von Ethylen und gegebenenfalls dem Alpha-Olefin, die kontinuierliche oder semikontinuierliche Einbringung eines auf Chromoxid basierenden Katalysators und das kontinuierliche oder semikontinuierliche Abziehen des (Co)Polymers aus dem Reaktor umfasst, wobei dieses Verfahren **dadurch gekennzeichnet ist, dass** das halogenierte Alkan oder Cycloalkan kontinuierlich in einer solchen Menge in den Reaktor eingebracht wird, dass das Molverhältnis des halogenierten Alkans oder Cycloalkans zum Chrom des Katalysators, welche in den Reaktor eingebracht werden, im Bereich von 0,001 bis 1 liegt.

8. Verfahren gemäß irgendeinem der Ansprüche 1 bis 7, **dadurch gekennzeichnet, dass** der auf Chromoxid basierende Katalysator mit Titan und/oder Aluminium und/oder Fluor modifiziert wird.

9. Verwendung eines halogenierten Alkans oder Cycloalkans als Mittel zur Erhöhung der Katalysatoraktivität eines Chromoxids-Katalysators bei der Gasphasen-(Co)Polymerisation von Ethylen.

## Revendications

1. Procédé de (co)polymérisation d'éthylène en présence d'un catalyseur à base d'oxyde de chrome, **caractérisé en ce que** le procédé est mis en oeuvre dans un milieu de polymérisation en phase gazeuse et comprend l'introduction dans ledit milieu d'un alcane ou d'un cycloalcane halogéné en une quantité telle que le rapport molaire de l'alcane ou du cycloalcane halogéné au chrome du catalyseur qui sont introduits dans le milieu de polymérisation en phase gazeuse est de 0,001 à 1.

2. Procédé selon la revendication 1, **caractérisé en ce. que** l'alcane halogéné correspond à la formule générale
CₙHₐX_{b}
dans laquelle X représente un atome d'halogène, a et b sont des nombres entiers identiques ou différents, a variant de 0 à 2n+1, b variant de 1 à 2n+2, et la somme (a+b) étant égale à 2n + 2, et dans lequel le cycloalcane halogéné correspond à la formule générale
CₘH_{c}X_{d},
dans laquelle X représente un atome d'halogène, c et d sont des nombres entiers identiques ou différents, c variant de 0 à 2m-1, d variant de 1 à 2m, et la somme (c+d ) étant égale à 2 m.

3. Procédé selon l'une quelconque des revendications 1 à 2, **caractérisé en ce que** l'alcane ou le cycloalcane halogéné est choisi parmi le dichlorométhane, le chloroforme, le tétrachlorure de carbone, le 1,1,1-trichloroéthane ou le 1,2-dichloroéthane.

4. Procédé selon l'une quelconque des revendications 1 à 3, **caractérisé en ce qu'**il est mis en oeuvre dans un réacteur à lit fluidisé et/ou à lit agité.

5. Procédé selon l'une quelconque des revendications 1 à 4, **caractérisé en ce que** la (co)polymérisation est effectuée en continu et **en ce que** l'alcane ou le cycloalcane halogéné est introduit en continu dans le milieu de polymérisation en phase gazeuse.

6. Procédé selon l'une quelconque des revendications 1 à 5 **caractérisé en ce que** l'alcane ou le cycloalcane halogéné est introduit sous la forme d'une solution ou d'un mélange dans un ou plusieurs hydrocarbures liquides.

7. Procédé continu de (co)polymérisation en phase gazeuse d'éthylène avec éventuellement au moins une alpha-oléfine, mis en oeuvre dans un réacteur à lit fluidisé et/ou mécaniquement agité, comprenant l'introduction en continu de l'éthylène et éventuellement d'une alpha-oléfine, l'introduction continue ou semi-continue d'un catalyseur à base d'oxyde de chrome et le soutirage continu ou semi-continu du (co)polymère du réacteur, ledit procédé ayant pour caractéristique qu'un alcane ou cycloalcane halogéné est introduit en continu dans le réacteur en une quantité telle que le rapport molaire de l'alcane ou du cycloalcane halogéné au chrome du catalyseur qui sont introduits dans le réacteur soit de 0,001 à 1.

8. Procédé selon l'une quelconque des revendications 1 à 7, **caractérisé en ce que** le catalyseur à base d'oxyde de chrome est modifié avec du titane et/ou de l'aluminium et/ou du fluor.

9. Utilisation d'un alcane ou cycloalcane halogéné comme agent pour augmenter l'activité d'un catalyseur à base d'oxyde de chrome dans une (co)polymérisation en phase gazeuse d'éthylène.
